# FASCICULE DE BREVET EUROPEEN

(11) **EP 2 900 460 B1**
(45) Date de publication et mention de la délivrance du brevet: **02.05.2018**
(21) Numéro de dépôt: 13779312.1
(22) Date de dépôt: 26.09.2013
(51) Int. Cl.: B29D 11/00, G02C 7/02, B33Y 10/00, B29C 64/00

(54) **PROCÉDÉ DE FABRICATION D'UNE LENTILLE OPHTALMIQUE**
VERFAHREN ZUR HERSTELLUNG EINER OPHTHALMISCHEN LINSE
METHOD FOR MANUFACTURING AN OPHTHALMIC LENS

(30) Priorité: 28.09.2012 FR 1259199
(43) Date de publication de la demande: 05.08.2015
(73) Titulaire: Essilor International, 94220 Charenton-le-Pont (FR)
(72) Inventeur: ALLIONE, Pascal, F-94220 Charenton-le-Pont (FR); BEGON, Cédric, F-94220 Charenton-le-Pont (FR); FAUQUIER, Bruno, F-94220 Charenton-le-Pont (FR); GOURRAUD, Alexandre, F-94220 Charenton-le-Pont (FR); QUERE, Loïc, F-94220 Charenton-le-Pont (FR)
(74) Mandataire: Santarelli
(86) Numéro de dépôt international: PCT/FR2013/052267
(87) Numéro de publication internationale: WO 2014/049273

(56) Documents cités:
- EP-A1- 1 918 760
- DE-A1-102009 004 377
- US-A- 4 679 918
- US-A- 5 851 328

## Description

L'invention concerne le domaine de la fabrication des lentilles ophtalmiques présentant au moins une fonction optique, par exemple des lentilles ophtalmiques progressives.

L'invention concerne plus particulièrement un procédé de fabrication de telles lentilles ophtalmiques.

L'invention concerne également une machine de fabrication configurée pour fabriquer une telle lentille ophtalmique.

On sait que les lentilles ophtalmiques sont soumises à différentes étapes de fabrication afin de leur apporter les propriétés ophtalmiques prescrites, lesquelles sont par exemple complexes.

On connaît des procédés de fabrication de lentilles ophtalmiques qui comportent une étape de fourniture d'un palet brut ou semi-fini, c'est-à-dire un palet n'ayant aucune ou ayant une seule face dite finie (autrement dit une face qui définit une surface optique simple ou complexe).

Ces procédés comportent ensuite une étape d'usinage par tournage d'au moins une face du palet dite brute, pour obtenir une face dite finie, définissant la surface optique complexe recherchée pour fournir les propriétés ophtalmiques (complexes ou non) prescrites au porteur de la lentille ophtalmique.

L'invention vise à fournir un procédé de fabrication d'une lentille ophtalmique présentant au moins une fonction optique complexe, différent d'un procédé d'usinage par tournage, et qui soit particulièrement simple, commode et économique à mettre en oeuvre.

L'invention a ainsi pour objet, sous un premier aspect, un procédé de fabrication d'une lentille ophtalmique présentant au moins une fonction optique, caractérisé en ce qu'il comporte l'étape de fabriquer de manière additive un élément optique complémentaire par le dépôt d'une pluralité d'éléments de volume prédéterminés d'un matériau ayant un indice de réfraction prédéterminé sur un support de fabrication prédéterminé, ledit élément optique complémentaire étant configuré pour être assemblé avec un système optique de départ ;
avec ladite étape de fabriquer de manière additive qui comporte l'étape de déterminer une consigne de fabrication à partir de caractéristiques de déformation dudit élément optique complémentaire due au transfert de ce dernier vers ledit système optique de départ ;
et avec ladite étape de déterminer une consigne de fabrication qui comporte l'étape de déterminer lesdites caractéristiques de déformation dudit élément optique complémentaire à partir de caractéristiques géométriques dudit support de fabrication, à partir de caractéristiques géométriques dudit système optique de départ, et à partir de caractéristiques de ladite fonction optique à apporter à ladite lentille ophtalmique.

Le procédé de fabrication selon l'invention permet avantageusement d'obtenir une lentille ophtalmique présentant une fonction optique, dite fonction optique cible, en partant d'un système optique de départ qui peut être réalisé selon différents procédés de fabrication, tels que le moulage ou l'usinage, et en ajoutant à ce système optique de départ un élément optique complémentaire réalisé par fabrication additive, lequel élément optique complémentaire fournit des propriétés ophtalmiques, additionnelles ou non, à la lentille ophtalmique.

On notera que c'est principalement l'élément optique complémentaire qui permet d'apporter la fonction optique de la lentille ophtalmique, même si le système optique de départ présente déjà une fonction optique, simple ou complexe. Autrement dit, sans cet élément optique complémentaire, la lentille ophtalmique ne peut présenter la fonction optique qui lui est prescrite. Cet élément optique complémentaire n'a donc rien à voir avec un simple revêtement de surface, tel qu'une couche de revêtement antireflet, de revêtement antibuée, de revêtement anti-rayures ou encore de revêtement anti-salissures.

On notera en outre que grâce à l'étape de déterminer les caractéristiques de déformation de cet élément optique complémentaire, ce dernier est fabriqué de manière additive avec une grande précision. En effet, cette étape permet notamment de prendre en compte, pour former l'élément optique complémentaire, l'écart de géométrie qui existe entre le support de fabrication sur lequel l'élément optique complémentaire est fabriqué et le système optique de départ sur lequel l'élément optique complémentaire doit être assemblé pour former la lentille ophtalmique.

Le procédé de fabrication selon l'invention est donc particulièrement simple, commode et économique, surtout dans un contexte où la diversité des fonctions optiques à réaliser est importante (du fait de la personnalisation de ces fonctions optiques), nécessitant des procédés de fabrication rapides et flexibles.

On notera que la fabrication additive correspond ici à un procédé d'impression tridimensionnelle, ou de stéréolithographie, ou encore d'extrusion par fil thermoplastique.

On notera également que l'on entend par fonction optique d'une lentille, d'un système ou d'un élément optique, la réponse optique de cette lentille ou de ce système ou de cet élément, c'est-à-dire une fonction définissant toute modification de propagation et de transmission d'un faisceau optique à travers la lentille, le système ou l'élément optique concerné, quelle que soit l'incidence du faisceau optique entrant et quelle que soit l'étendue géométrique d'un dioptre d'entrée illuminée par le faisceau optique incident.

Plus précisément, dans le domaine ophtalmique, la fonction optique est définie comme la répartition des caractéristiques de puissance porteur et d'astigmatisme et des aberrations d'ordre supérieur associées à la lentille, au système ou à l'élément optique pour l'ensemble des directions du regard d'un porteur de cette lentille, de ce système ou de cet élément. Cela suppose bien entendu la prédétermination du positionnement géométrique de la lentille, du système ou de l'élément optique par rapport à l'oeil du porteur.

Selon des caractéristiques préférées, simples, commodes et économiques du procédé selon l'invention :
- ladite fonction optique à apporter à ladite lentille ophtalmique est caractéristique de valeurs de prescription liées à un porteur de ladite lentille ophtalmique et optionnellement de données complémentaires de port et/ou de personnalisation ;
- ledit système optique de départ présente une fonction optique initiale et lesdites caractéristiques de déformation sont déterminées en outre à partir de caractéristiques de ladite fonction optique initiale dudit système optique de départ ;
- lesdites caractéristiques de déformation sont déterminées en outre à partir d'une valeur dudit indice de réfraction dudit matériau dans lequel est fabriqué de manière additive ledit élément optique complémentaire ;
- ladite étape de déterminer une consigne de fabrication comporte en outre l'étape de déterminer un retrait dimensionnel et/ou une variation d'indice de réfraction dudit matériau dans lequel est fabriqué de manière additive ledit élément optique complémentaire ;
- ledit élément optique complémentaire ensemble avec ledit support de fabrication sont configurés pour être assemblés avec ledit système optique de départ, ou ledit élément optique complémentaire est configuré pour être retiré dudit support de fabrication avant d'être assemblé avec ledit système optique de départ ;
- ladite étape de fabrication additive dudit élément optique complémentaire est réalisée, à partir de ladite consigne de fabrication déterminée, par ledit dépôt d'une pluralité desdits éléments de volume prédéterminés d'un matériau photo-polymérisable sous forme liquide, et ladite étape de fabrication additive est configurée pour que ledit élément optique complémentaire obtenu soit au moins partiellement déformable, par exemple sous forme de gel ;
- le procédé comporte en outre l'étape de fournir ledit système optique de départ, l'étape de fournir ledit élément optique complémentaire et l'étape de déposer et fixer ledit élément optique complémentaire sur ledit système optique de départ pour obtenir ladite lentille ophtalmique ; et/ou
- le procédé comporte une étape d'irradiation de ladite lentille ophtalmique.

L'invention a aussi pour objet, sous un deuxième aspect, une machine de fabrication additive configurée pour fabriquer une lentille ophtalmique et comportant une unité de contrôle et de commande pourvue d'éléments systémiques configurés pour exécuter un programme d'ordinateur comportant des instructions configurées pour mettre en oeuvre chacune des étapes du procédé de fabrication décrit ci-dessus. US 2010/0007847 divulgue un procédé de fabrication d'une lentille ophtalmique ainsi qu'une machine permettant la mise en oeuvre dudit procédé. On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement une machine de fabrication additive configurée pour réaliser au moins un élément optique complémentaire d'une lentille ophtalmique ;
- la figure 2 représente schématiquement différentes étapes de fabrication d'une lentille ophtalmique, au moins partiellement à l'aide de la machine illustrée sur la figure 1 ;
- la figure 3 est un schéma-blocs illustrant différentes étapes de fonctionnement d'un procédé de fabrication d'une lentille ophtalmique, dont les étapes illustrées sur la figure 2 ; et
- la figure 4 est un schéma-blocs illustrant d'autres étapes de fonctionnement du procédé de fabrication d'une lentille ophtalmique.

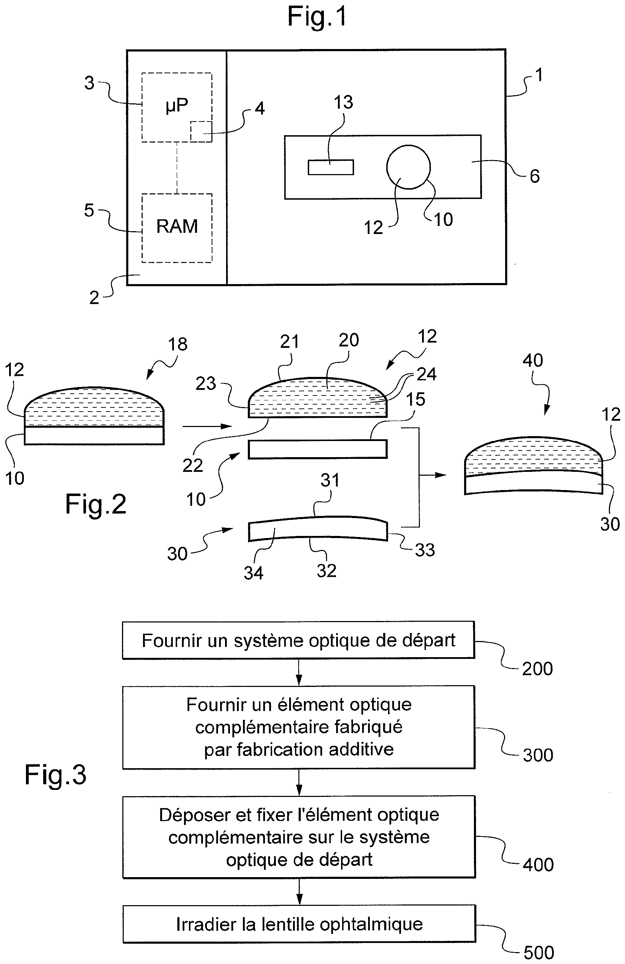

La figure 1 illustre une machine de fabrication additive 1, ici une machine d'impression tridimensionnelle à commande numérique, la commande numérique désignant l'ensemble des matériels et logiciels ayant notamment pour fonction de donner des instructions de mouvement à tous les organes de la machine de fabrication additive 1.

Cette machine de fabrication additive 1 est ici configurée pour déposer, par juxtaposition, une pluralité d'éléments de volume prédéterminés formant des couches superposées (autrement dit en couche par couche), d'au moins un matériau sur un support de fabrication 10 pour former un élément optique complémentaire 12.

Cet élément optique complémentaire 12 est configuré pour former partiellement une lentille ophtalmique 40 (figure 2). Il s'agit donc d'un élément optique complémentaire dit « ophtalmique », par exemple progressif possédant en outre des composantes toriques et prismatiques.

Chaque élément de volume prédéterminé est défini par une composition prédéterminée et une taille prédéterminée.

Comme il s'agit ici de fabrication additive et en particulier d'impression tridimensionnelle, on parle également d'élément volumétrique, ou élément de volume, appelé aussi voxel (représentatif d'un pixel en trois dimensions).

Cet élément optique complémentaire 12 est donc porté par le support de fabrication 10.

On notera que ce support de fabrication 10 est un support prédéterminé de la machine de fabrication additive 1 et donc que ses caractéristiques géométriques sont connues et regroupées dans un fichier qui est stocké ou chargé une unité de contrôle et de commande 2 de la machine de fabrication additive 1.

L'ensemble des matériels et logiciels de la machine de fabrication additive 1 est en outre configuré pour donner des instructions de mouvement et de manipulation de matériaux et de dispositifs de polymérisation que comporte cette machine.

La machine de fabrication additive 1 comporte une buse ou une rampe de buses 13 ainsi que l'unité de contrôle et de commande 2, laquelle est pourvue d'un système de traitement de données comportant un microprocesseur 3 muni d'une mémoire 4, notamment non volatile, lui permettant de charger et stocker un logiciel, autrement dit un programme d'ordinateur qui, lorsqu'il est exécuté dans le microprocesseur 3, permet la mise en oeuvre d'un procédé de fabrication additive. Cette mémoire non volatile 4 est par exemple de type ROM (« *Read-Only Memory* » en anglais).

L'unité 2 comporte en outre une mémoire 5, notamment volatile, permettant de mémoriser des données durant l'exécution du logiciel et la mise en oeuvre du procédé de fabrication additive.

Cette mémoire volatile 5 est par exemple de type RAM ou EEPROM (respectivement « *Random Access Memory* » et « *Electrically Erasable Programmable Read-Only Memory* » en anglais).

La machine de fabrication additive 1 comporte de plus une ouverture 6, ici vitrée, configurée pour accéder à l'élément optique complémentaire 12 fabriqué de manière additive par cette machine 1 sur le support de fabrication 10 de cette dernière.

On notera que pour fabriquer de manière additive l'élément optique complémentaire 12, on a besoin de connaître précisément certains paramètres de fabrication additive, tels que la vitesse d'avance de la ou des buses 13, l'énergie et la source d'énergie mises en oeuvre, ici une source émettant dans l'ultra-violet pour la machine d'impression tridimensionnelle mais il pourrait s'agir d'un laser dans le cas d'une machine de stéréolithographie ou encore d'une énergie de chauffe dans le cas d'un dépôt à fil tendu appelé aussi extrusion par fil thermoplastique.

On a aussi besoin de connaître précisément le ou les matériaux utilisés et leur état, ici sous forme de photopolymère liquide.

On a aussi besoin de connaître précisément la ou les fonctions optiques simples ou complexes prescrites à la lentille ophtalmique 40, fonction optique qui est caractérisée par une géométrie définie dans un fichier de fabrication caractéristique des propriétés optiques simples ou complexes de la lentille ophtalmique 40.

On rappelle que par fonction optique d'une lentille, d'un système ou d'un élément optique, on entend la réponse optique de cette lentille ou de ce système ou de cet élément, c'est-à-dire une fonction définissant toute modification de propagation et de transmission d'un faisceau optique à travers la lentille, le système ou l'élément optique concerné, quelle que soit l'incidence du faisceau optique entrant et quelle que soit l'étendue géométrique d'un dioptre d'entrée illuminée par le faisceau optique incident.

Plus précisément, dans le domaine ophtalmique, la fonction optique est définie comme la répartition des caractéristiques de puissance porteur et d'astigmatisme et des aberrations d'ordre supérieur associées à la lentille, au système ou à l'élément optique pour l'ensemble des directions du regard d'un porteur de cette lentille, de ce système ou de cet élément. Cela suppose bien entendu la prédétermination du positionnement géométrique de la lentille, du système ou de l'élément optique par rapport à l'oeil du porteur.

On notera également que la puissance porteur est une manière de calculer et d'ajuster la puissance de la lentille ophtalmique, qui se différencie de la puissance frontofocomètre. Le calcul en puissance porteur assure que la puissance perçue par le porteur (c'est-à-dire la puissance du faisceau de lumière qui rentre dans l'oeil), une fois la lentille positionnée dans la monture et portée par le porteur, corresponde à la puissance prescrite. En général, en tout point du verre, notamment au niveau des points de contrôle de vision de loin et de vision de près, pour un verre progressif, la puissance mesurée avec un frontofocomètre se différencie de la puissance porteur. Cependant, la puissance porteur au niveau du centre optique d'une lentille unifocale est généralement proche de la puissance observée avec un frontofocomètre positionné en ce point.

La figure 2 montre, schématiquement, différentes étapes d'un procédé de fabrication de la lentille ophtalmique 40, partant d'un système optique de départ 30 et de l'élément optique complémentaire 12 fabriqué de manière additive sur le support de fabrication 10.

On notera que l'ensemble formé par l'élément optique complémentaire 12 et le support de fabrication 10 forme un système composite additif 18. En outre, le support de fabrication peut présenter des propriétés optiques compatibles avec un usage ophtalmique et dans ce cas, le système composite additif forme un système optique additif.

Le support de fabrication 10 comporte un corps pourvu d'une surface de fabrication 15 qui présente ici une forme générale plane.

L'élément optique complémentaire 12 présente une première face 21 qui est ici convexe ainsi qu'une deuxième face 22 qui est ici plane. Cette deuxième face 22 est plane, c'est-à-dire avec une courbure proche de zéro, puisque c'est celle qui se trouve en regard de la surface de fabrication 15 sur laquelle l'élément optique complémentaire 12 est fabriqué de manière additive. Ici "plane" ne signifie pas forcément "lisse", ni n'exclut forcément la présence de rugosités.

Cet élément optique complémentaire 12 présente en outre un corps 20 entre la première face 21 et la deuxième face 22 ainsi qu'une tranche périphérique 23 raccordant la première face 21 à la deuxième face 22.

L'élément optique complémentaire 12 est ici formé par une pluralité d'éléments de volume prédéterminés qui sont juxtaposés et superposés pour former une pluralité de couches superposées d'un matériau 24.

Cette pluralité de couches superposées forme le corps 20 ensemble avec la première face 21 et la deuxième face 22 de cet élément optique complémentaire 12.

On observera que les couches superposées du premier matériau 24 présentent ici des longueurs différentes de manière à former les première et deuxième faces 21 et 22 de cet élément optique complémentaire 12.

Ces couches présentent ici chacune une épaisseur constante sur la longueur et elles présentent toutes la même épaisseur.

On notera que cette équi-épaisseur est ici obtenue grâce à la diffusion contrôlée et commandée, par la buse ou la rampe de buses 13 de la machine de fabrication 1, d'une quantité déterminée d'éléments de volume prédéterminés pour chaque couche superposée du matériau 24.

On notera que le matériau 24 est ici un polymère acrylique, et plus précisément un photopolymère, par exemple un photopolymère tel que le produit commercialisé par la société OBJET Ltd, sous la marque VeroClear™.

On notera que la fabrication additive de l'élément optique complémentaire 12 peut nécessiter, en plus du dépôt de la pluralité de couches successives et superposées, une ou plusieurs étapes de photo-polymérisation. On notera d'ailleurs, comme on le verra ci-après plus en détail, que la polymérisation de l'élément optique complémentaire 12 peut ne pas être complètement terminée à la fin de l'étape de fabrication additive de cet élément optique complémentaire 12.

Le système optique de départ 30 comporte quant à lui une première face 31 qui est ici courbe et une deuxième face 32 qui est ici également courbe et plus précisément concave.

Ce système optique de départ 30 comporte en outre un corps 34 entre la première surface 31 et la deuxième surface 32 ainsi qu'une tranche périphérique 33 raccordant la première face 31 à la deuxième face 32.

Ce système optique de départ 30 est réalisé en un matériau généralement utilisé pour la fabrication de lentilles ophtalmiques tel que le polymère allylique connu sous le nom CR39.

Ce système optique de départ 30 présente donc également un indice de réfraction prédéterminé, par exemple égal à environ 1,5.

On notera que les matériaux avec lesquels sont formés le système optique de départ 30 et l'élément optique complémentaire 12 et qui sont mentionnés ci-dessus présentent des indices de réfraction similaires (voire voisins) afin de minimiser la réflexion optique d'interface.

On notera également que ce système optique de départ 30 présente ici une fonction optique simple (il pourrait présenter une fonction optique complexe) et que les caractéristiques de cette fonction optique simple sont connues et caractérisées dans un fichier stocké ou chargé dans l'unité de contrôle et de commande 2 de la machine de fabrication additive 1.

La figure 2 montre également la lentille ophtalmique 40 formée à partir de l'élément optique complémentaire 12 et du système optique de départ 30 qui sont assemblés l'un avec l'autre.

L'élément optique complémentaire 12 est ici retiré du support de fabrication 10 pour être déposé sur le système optique de départ 30, avec la deuxième face 22 de l'élément optique complémentaire 12 qui se trouve en regard de la première face 31 du système optique de départ 30, et cet élément optique complémentaire 12 est fixé sur ce système optique de départ 30 pour former la lentille ophtalmique 40.

Cette fixation peut s'opérer par exemple grâce à un système adhésif ou une colle. Il peut s'agir d'un adhésif de qualité optique et sensible à la pression, du type PSA (« *Pressure Sensitive Adhesive* » en anglais), ou une colle transparente photopolymérisable.

Ainsi, la lentille ophtalmique 40 est fabriquée avec, comme face avant, ici la première face 21 de l'élément optique complémentaire 12 et avec, comme face arrière, ici la deuxième face 32 du système optique de départ 30.

Cette lentille ophtalmique 40 comporte également un corps formé ici du corps 20 et du corps 34 respectivement de l'élément optique complémentaire 12 et du système optique de départ 30.

Cette lentille ophtalmique 40 présente ainsi la fonction optique, ici complexe, qui lui est prescrite.

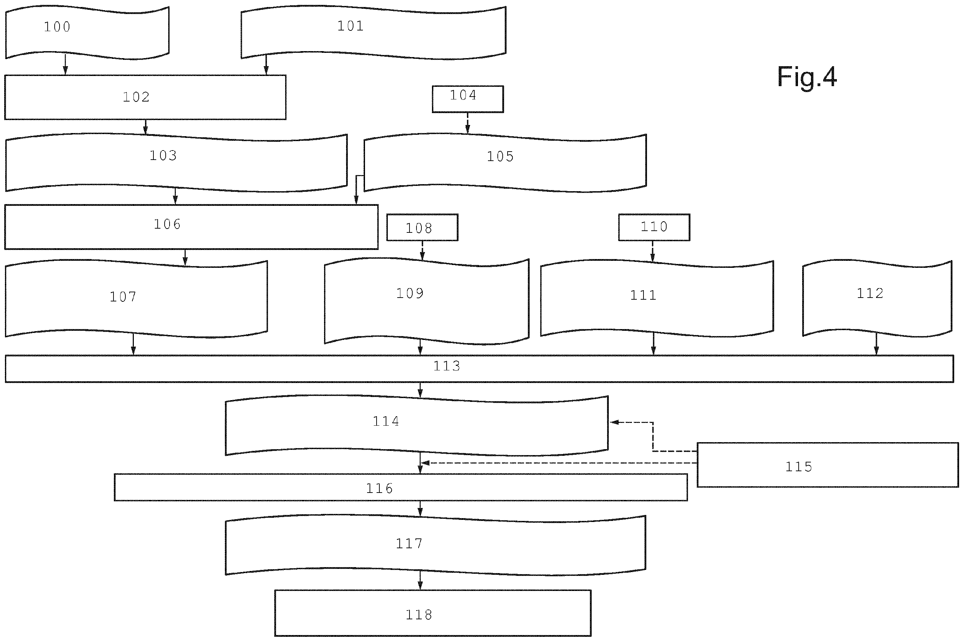

On va maintenant décrire plus en détail en référence aux figures 3 et 4 un procédé de fabrication de cette lentille ophtalmique 40.

Le procédé de fabrication comporte l'étape 200 de fournir le système optique de départ 30.

Le système optique de départ 30 est choisi en fonction de la lentille 12 à fabriquer et sa géométrie est donc connue, laquelle géométrie est caractérisée par un fichier de surface qui est stocké ou chargé dans l'unité de contrôle et de commande 2 de la machine de fabrication additive 1.

Dans le cas où le système optique de départ 30 présente une fonction optique initiale, cette dernière est également connue et caractérisée directement dans le fichier de surface.

Le procédé comporte en outre l'étape 300 de fournir l'élément optique complémentaire 12 obtenu par fabrication additive avec cette machine de fabrication additive 1.

Ici, c'est plus particulièrement le système composite additif 18 qui est fourni et, comme indiqué ci-dessus, l'élément optique complémentaire 12 est désolidarisé du support de fabrication 10.

Le procédé comporte en outre l'étape 400 de déposer et fixer cet élément optique complémentaire 12 sur le système optique de départ 30, comme décrit ci-dessus.

On notera également que pour l'assemblage de l'élément optique complémentaire 12 avec le système optique de départ 30, il est possible d'utiliser un dispositif d'assemblage tel que le dispositif qui est décrit dans la demande de brevet français FR 2 883 984 ou encore dans la demande de brevet américain US 2009/0165932.

Le procédé comporte en outre l'étape 500 d'irradier la lentille ophtalmique 40 obtenue.

Cette étape 500 consiste à terminer la polymérisation de l'élément optique complémentaire 12 après assemblage de ce dernier sur le système optique de départ 30 de manière à stabiliser cet assemblage et donc la lentille ophtalmique 40.

On notera par ailleurs que durant cette étape 500, l'adhésion de ce dernier sur le système optique de départ 30 peut également être consolidée, notamment si cette étape 500 est une étape d'irradiation thermique et/ou aux ultra-violets. Cette étape 500 est ainsi dite de consolidation du matériau de l'élément optique complémentaire 12.

La figure 4 illustre des étapes du procédé de fabrication et plus précisément des étapes pour la détermination d'une consigne de fabrication de l'élément optique complémentaire 12 en vue de sa fabrication additive grâce à la machine de fabrication additive 1 illustrée sur la figure 1 ; et donc en vue de la fourniture de cet élément optique complémentaire 12 à l'étape 300 du procédé illustré sur la figure 3.

L'unité de contrôle et de commande 2 de la machine de fabrication additive 1 est configurée pour recevoir à l'étape 100 (« valeurs de prescription du porteur ») un fichier comportant des valeurs de prescription d'un porteur de la lentille ophtalmique 40 à fabriquer.

Ces valeurs de prescription du porteur sont généralement exprimées en dioptrie (D).

L'unité 2 est en outre configurée pour recevoir à l'étape 101 (« données complémentaires de port et de personnalisation ») des données complémentaires de port et de personnalisation, liées à la fois au porteur, à une monture prévue pour recevoir la lentille ophtalmique 40 et à la prescription.

On notera que ces données complémentaires de port et de personnalisation correspondent par exemple à des valeurs géométriques qui caractérisent notamment la monture et le comportement visuel du porteur. Il peut s'agir par exemple d'une distance entre l'oeil et la lentille et/ou d'une position du centre de rotation de l'oeil, et/ou d'un coefficient oeil-tête, et/ou d'un angle pantoscopique et/ou d'un galbe de la monture.

L'unité 2 est configurée pour déterminer à l'étape 102 (« détermination de la fonction optique correctrice adaptée au porteur ») une fonction optique correctrice adaptée au porteur à partir des valeurs de prescription porteur et des données complémentaires de port et de personnalisation reçues aux étapes respectives 100 et 101, et en fonction du positionnement géométrique de la lentille 40 par rapport à l'oeil du porteur.

Cette fonction optique correctrice adaptée au porteur correspond à la fonction optique cible de la lentille ophtalmique 40 à fabriquer (il s'agit d'une consigne initiale).

On notera que la détermination de la fonction optique correctrice adaptée au porteur peut être effectuée par exemple à l'aide d'un logiciel de tracé de rayons, lequel permet de déterminer la puissance porteur et l'astigmatisme résultant de la lentille dans les conditions de port de cette dernière. Une optimisation peut être effectuée en suivant des méthodes d'optimisation optique bien connues.

On notera également que l'étape 101 est optionnelle et donc que la fonction optique correctrice adaptée au porteur peut être déterminée par l'unité 2 à l'étape 102, seulement à partir des valeurs de prescription reçues à l'étape 101, et en fonction du positionnement géométrique de la lentille 12 par rapport à l'oeil du porteur.

L'unité 2 est configurée pour générer à l'étape 103 (« fonction optique cible 1 caractéristique de la fonction optique correctrice adaptée au porteur ») un fichier appelé « fonction optique cible 1 » qui caractérise cette fonction optique correctrice adaptée au porteur, à partir de l'étape 102.

On notera que ce fichier « fonction optique cible 1 » est un fichier dit de surface qui est pourvu par exemple de caractéristiques géométriques sous la forme de coordonnées x, y, z, θ, en un nombre fini de points, de caractéristiques liées à un indice de réfraction, de diverses distances et angles tels que ceux mentionnés plus haut.

On notera que la fonction optique correctrice adaptée au porteur peut, à la place d'être déterminée par l'unité 2 à l'étape 102, être directement reçue par cette unité 2 sous forme d'un tel fichier.

L'unité 2 est configurée pour recevoir à l'étape 105 (« caractéristiques de la fonction optique du système optique de départ ») un fichier comportant des caractéristiques de la fonction optique du système optique de départ 30. Cette fonction optique peut être simple, complexe ou afocale (autrement dit nulle).

Ce fichier est un fichier dit de surface qui est sensiblement similaire au fichier « fonction optique cible 1 » si ce n'est qu'il ne caractérise pas la lentille ophtalmique 12 à fabriquer mais le système optique de départ 30 choisi.

On observera que ce fichier comporte des caractéristiques qui sont ici mesurées directement sur ce système optique de départ 30, à l'étape 104 (« mesure »). Ces caractéristiques pourraient être prédéterminées et connues, sans nécessiter de mesures.

L'unité 2 est configurée pour déterminer, à l'étape 106 (« détermination de la fonction optique de l'élément optique complémentaire après report »), une fonction optique de l'élément optique complémentaire 12 que ce dernier présente après report, c'est-à-dire lorsqu'il est assemblé avec le système optique de départ 30.

Il s'agit en fait de la fonction optique à apporter à cet élément optique complémentaire 12, dite «fonction optique cible 2 », en prenant en considération que ce dernier est combiné avec le système optique de départ 30 (lui-même ayant une fonction optique initiale), pour que la lentille ophtalmique 40, résultat de l'assemblage de l'élément optique complémentaire 12 avec le système optique de départ 30, apporte au porteur la fonction optique correctrice qui lui est adaptée.

Cette étape de détermination 106 est donc réalisée à partir des caractéristiques que comportent le fichier généré à l'étape 103 et le fichier reçu à l'étape 105, respectivement relatifs à la fonction optique correctrice adaptée au porteur ainsi qu'à la fonction optique du système optique de départ 30.

L'unité 2 est configurée pour générer à l'étape 107 (« fonction optique cible 2 caractéristique de la fonction optique de l'élément optique complémentaire ») un fichier appelé « fonction optique cible 2 » qui caractérise la fonction optique de l'élément optique complémentaire 12, à partir de l'étape 106.

L'unité 2 est en outre configurée pour recevoir à l'étape 109 (« caractéristiques de la géométrie du système optique de départ et optionnellement de son indice ») un fichier comportant des caractéristiques de la géométrie du système optique de départ 30 et optionnellement des caractéristiques liées à son indice de réfraction.

On observera que ce fichier comporte des caractéristiques géométriques et/ou d'indice qui sont ici mesurées directement sur ce système optique de départ 30, à l'étape 108 (« mesure »). Ces caractéristiques pourraient être prédéterminées et connues, sans nécessiter de mesures.

L'unité 2 est configurée pour recevoir à l'étape 111 (« caractéristiques de la géométrie du support de fabrication et optionnellement de son indice ») un fichier comportant des caractéristiques de la géométrie du support de fabrication 10 de la machine de fabrication additive 1 et optionnellement des caractéristiques liées à l'indice de réfraction de ce support de fabrication 10.

On notera que les caractéristiques liées à l'indice de réfraction de ce support de fabrication 10 ne sont nécessaires que dans le cas où c'est le système composite additif (formant un système optique additif) qui est directement assemblé avec le système optique de départ 30, tandis que ces caractéristiques ne sont pas nécessaires dans le cas où seul l'élément optique complémentaire 12 est assemblé avec le système optique de départ 30.

On observera que ce fichier comporte des caractéristiques géométriques et/ou d'indice qui sont ici mesurées directement sur ce support de fabrication 10, à l'étape 110 (« mesure »). Ces caractéristiques pourraient être prédéterminées et connues, sans nécessiter de mesures.

L'unité 2 est en outre configurée pour recevoir à l'étape 112 (« valeur de l'indice final du matériau de fabrication ») un fichier comportant des caractéristiques liées à l'indice de réfraction du matériau 24 utilisé pour la fabrication additive de l'élément optique complémentaire 12. Cet indice est dit final car c'est l'indice que doit présenter cet élément optique complémentaire 12 une fois ce dernier assemblé avec le système optique de départ 30, pour former la lentille ophtalmique 40.

L'unité 2 est configurée pour déterminer à l'étape 113 (« détermination des caractéristiques de déformation de l'élément optique complémentaire ») les caractéristiques de déformation de cet élément optique complémentaire 12 liées à l'assemblage de ce dernier avec le système optique de départ 30.

Ces caractéristiques de déformation sont déterminées à partir des caractéristiques et valeurs générées ou reçues dans les fichiers aux étapes 107, 109, 111 et 112, respectivement relatifs à la fonction optique cible de l'élément optique complémentaire 12 (après report), à la géométrie et optionnellement à l'indice du système optique de départ 30, à la géométrie et optionnellement à l'indice du support de fabrication 10, ainsi qu'à la valeur de l'indice final du matériau de fabrication de l'élément optique complémentaire 12.

On notera que cette étape de détermination des caractéristiques de déformation peut se caractériser par l'application d'une loi de transfert géométrique (dite aussi loi de transfert de géométries) à partir des caractéristiques et valeur indiquées ci-dessus de manière à caractériser la géométrie de l'élément optique complémentaire 12 une fois fabriqué sur le support de fabrication 10, avec son indice final, et prêt à être assemblé sur le système optique de départ 30.

L'étape de détermination 113 permet donc de prendre en compte l'écart de géométrie existant entre le support de fabrication 10 sur lequel est fabriqué l'élément optique complémentaire 12 et le système optique de départ 30 sur lequel repose et est fixé cet élément optique complémentaire 12. La loi de transfert permet donc de faire le lien entre la position d'un élément de volume prédéterminé de l'élément optique complémentaire 12 obtenu par fabrication additive sur le support de fabrication 10 et la position de ce même élément de volume prédéterminé dans l'assemblage final, c'est-à-dire dans la lentille ophtalmique 40 (autrement dit après l'assemblage de cet élément optique complémentaire 12 avec le système optique de départ 30).

On notera que cette loi de transfert est choisie de manière à tenir compte d'un champ de déformation tridimensionnel appliqué à l'élément optique complémentaire 12 durant l'étape d'assemblage 400 (figure 3) de ce dernier avec le système optique de départ 30.

L'unité 2 est en outre configurée pour générer un fichier à l'étape 114 (« géométrie de l'élément optique complémentaire sur le support de fabrication avec indice final ») comportant des caractéristiques géométriques de l'élément optique complémentaire 12 représentatif de la géométrie souhaitée de cet élément optique complémentaire 12 une fois fabriqué sur le support de fabrication 10, avec son indice final (c'est-à-dire une fois polymérisé ou photo-polymérisé). La géométrie souhaitée prend en considération la déformation de cet élément optique complémentaire 12 lors de son assemblage avec le système optique de départ 30.

Autrement dit, ce fichier dit de surface reflète une description de la géométrie souhaitée de cet élément optique complémentaire 12 à fabriquer, avec en pratique, un agencement déterminé des éléments de volume prédéterminés du ou des matériaux.

L'unité 2 est configurée pour déterminer, optionnellement, à l'étape 115 (« détermination du retrait dimensionnel et de la variation d'indice »), un retrait dimensionnel ainsi qu'une variation d'indice de l'élément optique complémentaire 12.

On notera qu'il s'agit ici d'évolutions possibles ultérieures de l'indice de réfraction du matériau 24 dans lequel est fabriqué l'élément optique complémentaire 12 étant donné que cet indice obtenu sur le support de fabrication 10 peut ensuite évoluer vers un autre indice après assemblage de l'élément optique complémentaire 12 sur le système optique de départ 30 (par exemple en raison d'effets thermiques mis en jeu lors de l'étape d'assemblage ou en raison d'effets de déformation mécanique).

Cet indice peut également évoluer vers encore un autre indice après une éventuelle étape dite de consolidation pour assurer la fixation de cet élément optique complémentaire 12 sur le système optique de départ 30.

Cette étape de détermination 115 permet en outre de prendre en compte l'éventuelle variation de géométrie (retrait dimensionnel) et d'indice résultant de la mise en oeuvre de cette étape dite de consolidation.

On notera que cette étape éventuelle de consolidation peut être nécessaire, comme indiqué ci-avant, lorsque l'élément optique complémentaire 12 obtenu après fabrication additive est au moins partiellement déformable, par exemple sous forme de gel. Ceci est dû au fait que la polymérisation de cet élément optique de départ 12 durant sa fabrication additive n'a pas été complète. La relative souplesse de cet élément optique complémentaire 12 obtenu permet notamment de faciliter l'assemblage décrit ci-dessus à l'étape 400. Dans ce cas, l'étape de consolidation correspond en fait à l'étape d'irradiation 500.

L'unité 2 est en outre configurée pour déterminer à l'étape 116 (« détermination de la consigne de fabrication et génération d'un fichier de fabrication ») la consigne de fabrication de l'élément optique complémentaire 12, et générer ainsi un fichier de fabrication dit « consigne ».

Cette étape 116 de détermination de la consigne est réalisée à partir des caractéristiques que comporte le fichier généré à l'étape 114 relatif à la géométrie de l'élément optique complémentaire 12 sur le support de fabrication 10, avec indice final, et à partir de la détermination du retrait dimensionnel et de la variation d'indice à l'étape 115.

L'unité 2 est configurée pour générer à l'étape 117 (« consigne de fabrication sur le support de fabrication dans le repère de la machine de fabrication additive ») le fichier de fabrication correspondant à la consigne de fabrication sur le support de fabrication 10 (dans un repère de la machine de la fabrication additive 1).

Ce fichier « consigne » est similaire au fichier de géométrie de l'élément optique complémentaire 12 généré à l'étape 114, si ce n'est qu'il reflète une description modifiée de la géométrie souhaitée de cet élément optique complémentaire 12 à fabriquer, avec en pratique, un agencement modifié des éléments de volume prédéterminés du ou des matériaux ; ces modifications étant liées à un éventuel retrait dimensionnel lors de l'étape de consolidation ainsi qu'à une éventuelle variation d'indice de l'élément optique complémentaire 12 déterminés à l'étape 115.

C'est donc ce fichier « consigne » qui caractérise la géométrie et la fonction optique à apporter à l'élément optique complémentaire 12, prenant en compte le fait qu'il est combiné avec le système optique de départ 30, pour obtenir une lentille ophtalmique 40 ayant la fonction optique correctrice adaptée au porteur.

C'est aussi à partir de ce fichier « consigne » qui caractérise la géométrie et la fonction optique à apporter à l'élément optique complémentaire 12 que ce dernier est fabriqué.

Pour cela, l'unité 2 peut également être configurée pour lancer à l'étape 118 (« fabrication additive de l'élément optique complémentaire sur le support de fabrication ») la fabrication additive de l'élément optique complémentaire 12 sur le
support de fabrication 10 dans la machine de fabrication additive 1, sur la base des caractéristiques du fichier de fabrication généré à l'étape 117.

On observera (figure 4) que les résultats de l'étape de détermination 115 peuvent être pris en compte lors de l'étape 114 de génération du fichier reflétant la géométrie souhaitée de l'élément optique complémentaire à fabriquer. Ce fichier est alors généré en prenant en compte, dans le cas où le procédé comporte une étape de consolidation, la variation de géométrie et d'indice entre l'élément optique complémentaire lors de l'assemblage avec l'élément optique de départ et postérieurement à l'étape de consolidation. On notera qu'il s'agit en fait de mettre en oeuvre l'étape 116 directement lors de l'étape 114.

L'unité de contrôle et de commande 2 est configurée pour exécuter un logiciel pour la mise en oeuvre du procédé de fabrication de la lentille ophtalmique, en utilisant les paramètres reçus, afin de déterminer la consigne de fabrication, voire de réaliser l'élément optique complémentaire puis la lentille ophtalmique.

Dans une variante non illustrée, une interface de communication client-serveur comporte un côté dit fournisseur et un autre côté dit client, ces deux côtés communicant via un réseau, par exemple du type internet.

Le côté fournisseur comporte un serveur relié à une unité de contrôle et de commande du même type que celle de la figure 1, mais cette fois-ci non intégrée à une machine de fabrication additive, ce serveur étant configuré pour communiquer avec l'interface internet.

Le côté client est configuré pour communiquer avec l'interface internet, et est relié à une unité de contrôle et de commande du même type que celle du côté fournisseur.

En outre, l'unité côté client est reliée à une machine de fabrication additive du même type que celle de la figure 1 pour fabriquer l'élément optique complémentaire de la lentille ophtalmique.

L'unité est configurée pour recevoir, côté client, les fichiers de données correspondant aux étapes 100 (optionnellement 101), 109, 111 et 112.

Cette unité envoie par l'intermédiaire de l'interface internet et du serveur ces données à l'unité côté fournisseur pour la détermination de la consigne de fabrication de l'élément optique complémentaire.

Cette unité exécute via son système de traitement de données le programme d'ordinateur qu'il contient pour mettre en oeuvre le procédé de fabrication et ainsi déduire la consigne de fabrication pour fabriquer l'élément optique complémentaire.

L'unité envoie, par l'intermédiaire du serveur et du réseau un fichier représentatif de la consigne de fabrication déterminée à l'unité de contrôle et de commande côté client.

Cette unité côté client est configurée pour exécuter un logiciel pour la mise en oeuvre du procédé de fabrication de la lentille ophtalmique, en utilisant les paramètres reçus, afin de réaliser l'élément optique complémentaire puis la lentille ophtalmique.

Dans des variantes non illustrées :
- la pluralité d'éléments de volume prédéterminés juxtaposés et superposés forme des couches superposées qui présentent chacune une épaisseur constante ou variable sur la longueur et/ou qui présentent toutes la même épaisseur ou pas ;
- le matériau est par exemple un matériau transparent déposé par stéréolithographie, ce matériau étant par exemple un polymère époxy commercialisé par la société 3D SYSTEMS sous la marque Accura® ClearVue;
- le matériau est un photopolymère comportant une ou plusieurs familles de molécules ayant une ou plusieurs fonctions acryliques, methacryliques, acrylates, methacrylates, une famille de molécules ayant une ou plusieurs fonctions époxy, thioépoxy, une famille de molécules ayant une ou plusieurs fonctions vinyle éther, vinyle caprolactame, vinylpyrolidone ou une combinaison de ces fonctions ; les fonctions chimiques mentionnées pouvant être portées par des monomères ou des oligomères ou une combinaison de monomères et oligomères ;
- le matériau peut comporter au moins un photo-initiateur ;
- le matériau peut comporter des colloïdes, en particulier des particules colloïdales ayant des dimensions par exemple inférieures aux longueurs d'onde visibles, telles que par exemple des particules colloïdales d'oxyde de Silice Si02 ou des particules colloïdales d'oxyde de Zircone Zr02 ;
- le matériau peut comporter, dans au moins certains des éléments de volume prédéterminés, un pigment ou un colorant, par exemple un colorant qui appartient aux familles des azo, ou rhodamines, ou cyanines, ou polymethines, ou merocyanines, ou fluorescéines, ou pyrylium, ou phtalocyanines, ou pérylènes, ou benzanthrones, ou anthrapyrimidines, ou anthrapyridones, ou encore un colorant pourvu de complexes métalliques tel que des chélates ou des cryptâtes de terres rares ;
- le système optique de départ est réalisé dans d'autres matériaux tels que le polycarbonate, le polymethylmethacylate, le polyamide ou des polymères thiouréthanes ou épisulfides, par exemple les matériaux commercialisés par la société Essilor sous les noms Orma, Airwear, Ormix, Stylis ou Lineis, et les indices sont compris par exemple dans l'intervalle [1,5 ; 1,74] pour le spectre visible ;
- le procédé comporte en outre une ou plusieurs autres étapes de fabrication, par exemple une étape de polissage de la lentille ophtalmique ou encore une étape de marquage pour former des marques dites temporaires ;
- le support de fabrication présente une surface de fabrication sur laquelle l'élément optique complémentaire est fabriqué de manière additive, laquelle surface de fabrication est au moins partiellement plane et/ou au moins partiellement sphérique ;
- le système optique additif est directement déposé et fixé sur le système optique de départ et donc la lentille ophtalmique est ainsi formée par le système optique de départ, le support de fabrication ainsi que l'élément optique complémentaire ; et le cas échéant, le support de fabrication peut être formé, comme le système optique de départ, d'un matériau généralement utilisé pour la fabrication de lentilles ophtalmiques, et peut également être un film polymère de qualité optique tel qu'un film de PET (Polyéthylène Terephtalate) ou de TAC (Triacetate de cellulose) ou de PU (Polyurethane) ou de COC (Cyclo Olefine Copolymere ou polymere) ou de PC (polycarbonate) ;
- le procédé de fabrication ne comporte pas d'étape supplémentaire d'irradiation thermique, mais plutôt une étape d'irradiation aux ultra-violets, voire aucune étape d'irradiation ;
- le procédé de fabrication comporte une étape où la prise en compte de la variation d'indice du matériau de l'élément optique complémentaire peut se faire sous la forme d'une boucle d'optimisation itérative selon des procédures d'optimisation connues ;
- la lentille ophtalmique comporte un système optique de départ et deux éléments optiques complémentaires disposés de part et d'autre du système optique de départ (lequel est pris en sandwich) ; avec au moins un des deux éléments optiques complémentaires qui est fabriqué de la manière décrite ci-dessus, en tenant compte non seulement de la fonction optique de l'élément optique de départ mais en tenant compte aussi de la fonction optique de l'autre des deux éléments optiques complémentaires ;
- le système optique de départ est teinté et présente de l'absorption, et/ou est revêtu d'un traitement configuré pour modifier ses caractéristiques de transmission et/ou de stabilité mécanique ;
- le matériau de l'élément optique complémentaire comporte optionnellement un ou plusieurs colorants, et/ou des nanoparticules configurées pour modifier sa transmission optique et/ou son aspect, et/ou des nanoparticules ou additifs configurés pour modifier ses propriétés mécaniques ;
- la machine de fabrication additive n'est pas une machine d'impression tridimensionnelle mais plutôt une machine de stéréolithographie, (SLA pour « Stereolithography *Apparatus* » en anglais) ou une machine d'extrusion par fil thermoplastique, aussi appelée machine de dépôt à fil tendu (FDM pour « *Fuse Déposition Modeling* » en anglais) ;
- l'unité de contrôle et de commande comporte un microcontrôleur en place du microprocesseur ;
- l'interface de communication client-serveur comporte des dispositifs configurés pour transférer la consigne de fabrication de l'élément optique complémentaire déterminée par un programme d'ordinateur, lequel comporte des instructions configurées pour mettre en oeuvre chacune des étapes du procédé de fabrication décrit ci-dessus lorsque ce programme d'ordinateur est exécuté dans une unité de contrôle et de commande qui comporte des éléments systémiques configurés pour exécuter ledit programme d'ordinateur ;
- l'interface de communication permet la communication via d'autres moyens que le réseau internet, par exemple via un réseau intranet ou un réseau privé sécurisé ; et/ou
- l'interface de communication permet de transférer l'ensemble du programme d'ordinateur vers un système de traitement de données distant pour la mise en oeuvre du procédé de fabrication dans une autre machine de fabrication additive, et optionnellement dans une ou plusieurs autres machines d'assemblage et/ou de polissage.

On rappelle plus généralement que l'invention ne se limite pas aux exemples décrits et représentés.

## Revendications

1. Procédé de fabrication d'une lentille ophtalmique (40) présentant au moins une fonction optique, **caractérisé en ce qu'**il comporte l'étape de fabriquer de manière additive (118) un élément optique complémentaire (12) par le dépôt d'une pluralité d'éléments de volume prédéterminés d'un matériau ayant un indice de réfraction prédéterminé (24) sur un support de fabrication prédéterminé (10), ledit élément optique complémentaire (12) étant configuré pour être assemblé avec un système optique de départ (30) ;
avec ladite étape de fabriquer de manière additive (118) qui comporte l'étape de déterminer une consigne de fabrication (116) à partir de caractéristiques de déformation dudit élément optique complémentaire (12) due au transfert de ce dernier vers ledit système optique de départ (30) ;
et avec ladite étape de déterminer une consigne de fabrication (116) qui comporte l'étape de déterminer lesdites caractéristiques de déformation (113) dudit élément optique complémentaire (12) à partir de caractéristiques géométriques dudit support de fabrication (10), à partir de caractéristiques géométriques dudit système optique de départ (30), et à partir de caractéristiques de ladite fonction optique à apporter à ladite lentille ophtalmique (40).

2. Procédé selon la revendication 1, **caractérisé en ce que** ladite fonction optique à apporter à ladite lentille ophtalmique (40) est caractéristique de valeurs de prescription liées à un porteur de ladite lentille ophtalmique (40) et optionnellement de données complémentaires de port et/ou de personnalisation.

3. Procédé selon l'une des revendications 1 et 2, **caractérisé en ce que** ledit système optique de départ (30) présente une fonction optique initiale et lesdites caractéristiques de déformation sont déterminées (113) en outre à partir de caractéristiques de ladite fonction optique initiale dudit système optique de départ (30).

4. Procédé selon l'une quelconque des revendications 1 à 3, **caractérisé en ce que** lesdites caractéristiques de déformation sont déterminées (113) en outre à partir d'une valeur dudit indice de réfraction dudit matériau (24) dans lequel est fabriqué de manière additive ledit élément optique complémentaire (12).

5. Procédé selon l'une quelconque des revendications 1 à 4, **caractérisé en ce que** ladite étape de déterminer une consigne de fabrication (116) comporte en outre l'étape de déterminer un retrait dimensionnel et/ou une variation d'indice de réfraction dudit matériau (24) dans lequel est fabriqué de manière additive ledit élément optique complémentaire (12).

6. Procédé selon l'une quelconque des revendications 1 à 5, **caractérisé en ce que** ledit élément optique complémentaire (12) ensemble avec ledit support de fabrication (10) sont configurés pour être assemblés avec ledit système optique de départ (30), ou ledit élément optique complémentaire (12) est configuré pour être retiré dudit support de fabrication (10) avant d'être assemblé avec ledit système optique de départ (30).

7. Procédé selon l'une quelconque des revendications 1 à 6, **caractérisé en ce que** ladite étape de fabrication additive (118) dudit élément optique complémentaire (12) est réalisée, à partir de ladite consigne de fabrication déterminée, par ledit dépôt d'une pluralité desdits éléments de volume prédéterminés d'un matériau (24) photo-polymérisable sous forme liquide, et ladite étape de fabrication additive (118) est configurée pour que ledit élément optique complémentaire (12) obtenu soit au moins partiellement déformable, par exemple sous forme de gel.

8. Procédé selon l'une quelconque des revendications 1 à 7, **caractérisé en ce qu'**il comporte en outre l'étape de fournir (200) ledit système optique de départ (30), l'étape de fournir (300) ledit élément optique complémentaire (12) et l'étape de déposer et fixer (400) ledit élément optique complémentaire (12) sur ledit système optique de départ (30) pour obtenir ladite lentille ophtalmique (40).

9. Procédé selon l'une quelconque des revendications 1 à 8, **caractérisé en ce qu'**il comporte une étape d'irradiation (500) de ladite lentille ophtalmique (40).

10. Machine de fabrication additive configurée pour fabriquer une lentille ophtalmique (40) et comportant une unité de contrôle et de commande (2) pourvue d'éléments systémiques (3, 4, 5) comprenant un programme d'ordinateur comportant des instructions configurées pour mettre en oeuvre chacune des étapes du procédé selon l'une quelconque des revendications 1 à 9.

## Patentansprüche

1. Verfahren zur Herstellung einer ophthalmischen Linse (40), die mindestens eine optische Funktion aufweist, **dadurch gekennzeichnet, dass** es den Schritt des additiven Herstellens (118) eines komplementären optischen Elements (12) durch Abscheiden mehrerer vorbestimmter Volumenelemente eines Materials mit einem vorbestimmten Brechungsindex (24) auf einem vorbestimmten Herstellungsträger (10) aufweist, wobei das komplementäre optische Element (12) konfiguriert ist, um mit einem optischen Ausgangssystem (30) zusammengefügt zu werden;
mit dem Schritt des additiven Herstellens (118), der den Schritt des Bestimmens eines Herstellungssollwertes (116) ausgehend von den Verformungseigenschaften des komplementären optischen Elements (12) aufgrund der Übertragung dieses Letzteren auf das optische Ausgangssystem (30) aufweist;
und mit dem Schritt des Bestimmens eines Herstellungssollwertes (116), der den Schritt des Bestimmens der Verformungseigenschaften (113) des komplementären optischen Elements (12) ausgehend von den geometrischen Eigenschaften des Herstellungsträgers (10), ausgehend von den geometrischen Eigenschaften des optische Ausgangssystems (30) und ausgehend von der optischen Funktion, die der ophthalmischen Linse (40) zu geben ist, aufweist.

2. Verfahren nach Anspruch 1, **dadurch gekennzeichnet, dass** die optische Funktion, die der ophthalmischen Linse (40) zu geben ist, für Verschreibungswerte, die mit einem Träger der ophthalmischen Linse (40) verbunden sind, und optional für komplementäre Daten des Tragens und/oder der Personalisierung charakteristisch ist.

3. Verfahren nach einem der Ansprüche 1 und 2, **dadurch gekennzeichnet, dass** das optische Ausgangssystem (30) eine anfängliche optische Funktion aufweist und die Verformungseigenschaften ferner ausgehend von den Eigenschaften der anfänglichen optische Funktion des optischen Ausgangssystems (30) bestimmt werden (113).

4. Verfahren nach einem der Ansprüche 1 bis 3, **dadurch gekennzeichnet, dass** die Verformungseigenschaften ferner ausgehend von einem Wert des Brechungsindexes des Materials (24), aus dem das komplementäre optische Element (12) additiv hergestellt wird, bestimmt werden (113).

5. Verfahren nach einem der Ansprüche 1 bis 4, **dadurch gekennzeichnet, dass** der Schritt des Bestimmens eines Herstellungssollwertes (116) ferner den Schritt des Bestimmens einer Dimensionsschrumpfung und/oder einer Änderung des Brechungsindexes des Materials (24), aus dem das komplementäre optische Element (12) additiv hergestellt wird, aufweist.

6. Verfahren nach einem der Ansprüche 1 bis 5, **dadurch gekennzeichnet, dass** das komplementäre optische Element (12) zusammen mit dem Herstellungsträger (10) konfiguriert werden, um mit dem optischen Ausgangssystem (30) zusammengefügt zu werden, oder das komplementäre optische Element (12) konfiguriert wird, um von dem Herstellungsträger (10) entfernt zu werden, bevor es mit dem optischen Ausgangssystem (30) zusammengefügt wird.

7. Verfahren nach einem der Ansprüche 1 bis 6, **dadurch gekennzeichnet, dass** der Schritt des additiven Herstellens (118) des komplementären optischen Elements (12) ausgehend von dem bestimmten Herstellungssollwert durch das Abscheiden mehrerer vorbestimmter Volumenelemente eines photopolymerisierbaren Materials (24) in flüssiger Form durchgeführt wird und der Schritt des additiven Herstellens (118) konfiguriert ist, damit das erhaltene komplementäre optische Element (12) mindestens teilweise verformbar, beispielsweise in Form von Gel ist.

8. Verfahren nach einem der Ansprüche 1 bis 7, **dadurch gekennzeichnet, dass** es ferner den Schritt des Bereitstellens (200) des optischen Ausgangssystems (30), den Schritt des Bereitstellens (300) des komplementären optischen Elements (12) und den Schritt des Abscheidens und Befestigens (400) des komplementären optischen Elements (12) auf dem optischen Ausgangssystem (30) aufweist, um die ophthalmische Linse (40) zu erhalten.

9. Verfahren nach einem der Ansprüche 1 bis 8, **dadurch gekennzeichnet, dass** es einen Schritt des Bestrahlens (500) der ophthalmischen Linse (40) aufweist.

10. Maschine zur additive Herstellung, die konfiguriert ist, um eine ophthalmische Linse (40) herzustellen, und eine Kontroll- und Steuereinheit (2) aufweist, die mit Systemelementen (3, 4, 5) versehen ist, umfassend ein Computerprogramm, das Anweisungen aufweist, die konfiguriert sind, um jeden der Schritte des Verfahrens nach einem der Ansprüche 1 bis 9 umzusetzen.

## Claims

1. Method of manufacturing an ophthalmic lens (40) having at least one optical function, **characterized in that** it comprises a step (118) of additively manufacturing a complementary optical element (12) by depositing a plurality of predetermined volume elements of a material having a predetermined refractive index (24) on a predetermined build support (10), said complementary optical element (12) being configured to be assembled with a starting optical system (30);
with said additive manufacturing step (118) comprising the step of determining manufacturing instructions (116) from characteristics regarding the deformation of said complementary optical element (12) caused by the transferring thereof to said starting optical system (30) ;
and with said step of determining manufacturing instructions (116) comprising the step of determining said deformation characteristics (113) of said complementary optical element (12) from geometric characteristics of said build support (10), from geometric characteristics of said starting optical system (30) and from characteristics of said optical function to be conferred on said ophthalmic lens (40).

2. Method according to Claim 1, **characterized in that** said optical function to be conferred on said ophthalmic lens (40) is characteristic of prescription values associated with a wearer of said ophthalmic lens (40) and optionally of complementary wearing and/or customization data.

3. Method according to either of Claims 1 and 2, **characterized in that** said starting optical system (30) has an initial optical function and said deformation characteristics are determined (113) from, additionally, characteristics of said initial optical function of said starting optical system (30).

4. Method according to any one of Claims 1 to 3, **characterized in that** said deformation characteristics are determined (113) from, additionally, a value of said refractive index of said material (24) from which said complementary optical element (12) is additively manufactured.

5. Method according to any one of Claims 1 to 4, **characterized in that** said step of determining manufacturing instructions (116) further comprises the step of determining a dimensional shrinkage and/or a variation in the refractive index of said material (24) of which said complementary optical element (12) is additively manufactured.

6. Method according to any one of Claims 1 to 5, **characterized in that** said complementary optical element (12) together with said build support (10) are configured to be assembled with said starting optical system (30) or said complementary optical element (12) is configured to be removed from said build support (10) before being assembled with said starting optical system (30).

7. Method according to any one of Claims 1 to 6, **characterized in that** said step (118) of additive manufacture of said complementary optical element (12) is carried out, on the basis of said determined manufacturing instructions, by said deposition of a plurality of said predetermined volume elements of a photo-polymerizable material (24) in liquid form, and said additive-manufacture step (118) is configured so that said complementary optical element (12) obtained is at least partially deformable, for example in the form of a gel.

8. Method according to any one of Claims 1 to 7, **characterized in that** it further comprises the step (200) of supplying said starting optical system (30), the step (300) of supplying said complementary optical element (12) and the step (400) of depositing and fixing said complementary optical element (12) on said starting optical system (30) in order to obtain said ophthalmic lens (40).

9. Method according to any one of Claims 1 to 8, **characterized in that** it comprises a step (500) of irradiating said ophthalmic lens (40).

10. Additive-manufacturing machine configured to manufacture an ophthalmic lens (40) and comprising a command and control unit (2) provided with systemic elements (3, 4, 5) comprising a computer program comprising instructions configured to implement each of the steps of the method according to any one of Claims 1 to 9.
